**Europäisches Patentamt**

**European Patent Office**

**Office européen des brevets**

(19)

(11) Veröffentlichungsnummer: **0 200 813**
**A2**

(12)
# EUROPÄISCHE PATENTANMELDUNG

(21) Anmeldenummer: **85112652.4**

(22) Anmeldetag: **05.10.85**

(51) Int. Cl.⁴: **A 01 G 27/00**

(30) Priorität: **04.05.85 DE 3516064**

(43) Veröffentlichungstag der Anmeldung: **12.11.86**
**Patentblatt 86/46**

(84) Benannte Vertragsstaaten: **AT BE CH DE FR GB IT LI LU NL SE**

(71) Anmelder: **Firma Carl Freudenberg, Höhnerweg 4, D-6940 Weinheim/Bergstrasse (DE)**

(72) Erfinder: **Butscher, Alfons, Carl-Orff-Strasse 37, D-6943 Birkenau (DE)**
Erfinder: **Frombold, Walter, Ostpreussenstrasse 21, D-6701 Waldsee (DE)**

(74) Vertreter: **Weissenfeld-Richters, Helga, Dr., Höhnerweg 2, D-6940 Weinheim/Bergstrasse (DE)**

(54) **Anstauvorrichtung für die Anzucht von Pflanzen oder Aussaaten.**

(57) Anstauvorrichtung für die Anzucht von Pflanzen oder Aussaaten, umfassend eine mit einem Wasserüberlauf versehene Wanne, eine darin angeordnete Speicherschicht und eine auf der Speicherschicht angeordnete Verteilerschicht aus Vliesstoff, wobei die Speicherschicht aus einer in senkrechter Richtung durchlässigen, nicht saugfähigen Stützschicht besteht und die Verteilerschicht die Stützschicht an wenigstens einer Stelle randseitig umgreift und bis auf den Boden der Wanne verlängert ist.

EP 0 200 813 A2

ACTORUM AG

H. Weissenfeld-Richters
Patentanwältin

Hönnerweg 2-4.
6940 Weinheim/Bergstr.
Telefon (0 62 01) 80-8618
Telex 4 65 531

0200813

17. September 1985

Mo/Sch

ON 5039/Europa

1

Anmelderin: Firma Carl Freudenberg, Weinheim

Anstauvorrichtung für die Anzucht von Pflanzen oder Aussaaten

Die Erfindung betrifft eine Anstauvorrichtung für die Anzucht von Pflanzen oder Aussaaten, umfassend eine mit einem Wasserüberlauf versehene Wanne, eine darin angeordnete Speicherschicht und eine auf der Speicherschicht angeordnete Verteilerschicht aus Vliesstoff.

Auf eine Anstauvorrichtung der vorgenannten Art nimmt die DE-OS 18 09 881 Bezug. Sie dient zur Bewässerung aufgestellter Blumentöpfe und umfaßt eine Verteilerschicht aus Vliesstoff, die entweder auf eine Schicht aus Sand oder unmittelbar auf den Boden der Wanne aufgelegt ist. In beiden Fällen ergibt sich somit eine senkrecht bis zum Boden der Wanne reichende Kapillarwirkung, die unabhängig von dem Pegel des in der Wanne aufgestauten Wassers zu einer starken Durchnässung des Vlieses führt. Diese überträgt sich oft in unerwünschtem Maße auf das Erdreich aufgesetzter Topfpflanzen, und kann hier zu einer wachstumshemmenden Versäuerung führen. Auch die starke Algenbildung an der Oberfläche des Vlieses wird bemängelt.

Ein weiterer Nachteil bei der Anstauvorrichtung nach der DE-OS 18 09 881 wird darin gesehen, daß das Speichervermögen nur relativ gering ist. Eine ständige Kontrolle des Wasserstandes ist daher unerläßlich, eine Verwendung im Freiland äußerst problematisch.

Der Erfindung liegt die Aufgabe zugrunde, eine Anstauvorrichtung der eingangs genannten Art derart weiterzuentwickeln, daß bei vergrößertem Speichervolumen eine Übernässung der Oberfläche weitgehend ausgeschlossen ist und die somit ohne ständige Kontrolle auch im Freiland eingesetzt werden kann.

Diese Aufgabe wird erfindungsgemäß bei einer Anstauvorrichtung der eingangs genannten Art dadurch gelöst, daß die Speicherschicht aus einer in senkrechter Richtung durchlässigen, nicht saugfähigen Stützschicht besteht und daß die Verteilerschicht die Stützschicht an wenigstens einer Stelle randseitig umgreift und bis auf den Boden der Wanne verlängert ist. Die Hohlräume der Stützschicht sind zu grob strukturiert, als daß Kapillarkräfte darin wirksam werden können.

In den Hohlräumen aufgestautes Wasser kann dadurch nicht in senkrechter Richtung nach oben in die Verteilerschicht eingespeist werden, sondern die diesbezügliche Wirkung ist auf die Bereiche der Verteilerschicht beschränkt, an denen sie die Stützschicht randseitig umgreift und bis auf den Boden verlängert ist. Eine Übersättigung der Verteilerschicht mit Wasser wird durch diese Ausbildung wirksam verhindert. Dennoch ist jederzeit und weitgehend unabhängig von dem tatsächlichen Wasserstand in der Stützschicht ein gleichmäßiger Feuchtigkeitsgehalt in der Verteilerschicht gewährleistet, der etwa demjenigen der Gartenerde entspricht. Auf die Verteilerschicht kann daher auch Erdreich unmittelbar aufgetragen und bepflanzt werden.

Durch die grobe Strukturierung der Hohlräume in der Stützschicht weist die Speicherschicht der erfindungsgemäßen Anstauvorrichtung eine wesentlich vergrößerte Aufnahmekapazität für Tränkwasser auf. Auch lange Trockenperioden zwischen kurzzeitigen Regenfällen lassen sich hierdurch bei einer Verlegung im Freien problemlos überbrücken, ohne daß ein nennenswerter Aufwand für Kontrollen erforderlich wäre.

Die Stützschicht kann im einfachsten Fall aus einer losen Schüttung eines groben Granulats bestehen. Bei ihrer Ausbringung ist lediglich darauf zu achten, daß eine gute Nivellierung der Oberfläche erfolgt. Eine eigenfeste Ausbildung macht den diesbezüglichen Aufwand entbehrlich.

Die Stützschicht kann bei einer fabrikmäßigen Herstellung untereinander verklebte Partikel und/oder Fasern umfassen. Die Tragfähigkeit ist bei der Verwendung von Partikeln im allgemeinen etwas höher, was beispielsweise im Hinblick auf eine gegebenenfalls erforderliche Befahrbarkeit von Vorteil sein kann.

4

Die Verwendung von Fasern erlaubt demgegenüber die Erzielung
einer relativ vergrößerten Speicherkapazität an Tränkflüssigkeit je Volumen sowie Gewichtseinheit. Sie kann über 90 Volumenprozent betragen.

Die Partikel bzw. Fasern sollen aus einem umweltverträglichen,
verrottungsfesten Material bestehen. Als besonders geeignet
hat sich die Verwendung von Partikeln und/oder Fasern aus einem Polyolefin erwiesen. Der Werkstoff ist in großen Mengen
kostengünstig verfügbar und zeichnet sich durch eine ausgezeichnete Beständigkeit aus im Hinblick auf alle im Erdreich
vorkommenden Agenzien. Durch die Verwendung eines geschäumten
Materials, insbesondere von geschlossenzellig geschäumtem,
vernetztem Polyäthylen lassen sich weitere Vorteile erzielen.
Diese bestehen neben einer aus dem verminderten Raumgewicht
resultierenden, vereinfachten Verlegbarkeit in einem Kostenvorteil.

Die Hohlräume der Stützschicht sind zweckmäßig untereinander
verbunden und belüftet. Faulgase können dadurch weder in den
Hohlräumen aufgestaut noch in das Erdreich eingepreßt werden.
Eine gute Qualität des in den Hohlräumen gespeicherten Gießwassers ist jederzeit gewährleistet.

Nach einer anderen Ausgestaltung ist es vorgesehen, daß die
Verteilerschicht zweischichtig ausgebildet ist und eine Oberschicht von verminderter Durchlässigkeit umfaßt. Eine solche
Oberschicht läßt sich bei einem Gehalt des verwendeten Vlieses an thermoplastischen Fasern leicht durch eine abschließende Hitzekalandrierung erhalten. Sie weist eine große mechanische Widerstandsfähigkeit auf, was eine unbeabsichtigte
Schädigung mit Bodenbearbeitungsgeräten weitgehend ausschließt.
Dennoch ist eine ausreichende Befeuchtung des aufgebrachten
Erdreichs bzw. aufgestellter Blumentöpfe stets gewährleistet,
sowie eine ausreichende Drainierwirkung im Hinblick auf gelegentlich auftretende Starkregenfälle.

In Hinblick auf eine einfache Verlegbarkeit hat es sich als
vorteilhaft bewährt, wenn die Stützschicht und die Verteilerschicht in einen Abstand aufweisenden Flächenbereich fest
verbunden sind. Beide Elemente können in diesem Falle gemeinsam verlegt werden, ohne daß besondere Vorsichtsmaßregeln beachtet werden müßten. Ihre Größe und Gestalt sind zweckmäßig
so festgelegt, daß neben einer gleichmäßigen Befeuchtung der
gesamten Oberfläche eine mosaikartige Zusammenfassung mit anderen, gleichartig oder abweichend ausgebildeten Elementen
möglich ist. Die abgedeckten Flächen der Wanne können dementsprechend von beliebiger Größe und Gestalt sein. Eine Verlegung durch ungeübte Kräfte ist ohne weiteres möglich.

Die erfindungsgemäße Anstauvorrichtung eignet sich in hervorragender Weise für die Begrünung von Dachgärten. Sie ist unproblematisch in der Anwendung und bedarf in ihrer Wirksamkeit keiner laufenden Kontrolle. Das Speichervolumen der Speicherschicht erlaubt es dabei, lange Trockenperioden zwischen
kurzzeitigen Regenfällen problemlos zu überbrücken.

Eine beispielhafte Ausführung der erfindungsgemäßen Anstauvorrichtung wird in der als Anlage beigefügten Zeichnung dargestellt. Sie wird nachfolgend näher erläutert:

Die gezeigte Anstauvorrichtung ist in den Unterbau eines
Dachgartens eingefügt. Dieser befindet sich oberhalb einer
tragenden Decke 1, welche von einer Öffnung senkrecht durchdrungen ist.

In die Öffnung ist der Überlauf 2 eingefügt, welcher an der
Oberseite der Decke 1 mit einem Flansch versehen und durch
den Flansch flüssigkeitsdicht mit der Dachhaut 3 verklebt ist.
Diese ist im Bereich des Außenrandes der Decke unter Bildung
einer wannenartigen Eintiefung hochgezogen und an der Umrandung 4 der Decke festgelegt.

In der Eintiefung ist die Speicherschicht 5 angeordnet, die die Speicherschicht seitlich umgreifende Verteilerschicht 6 sowie das oberhalb davon angeordnete, bepflanzte Erdreich. Die Speicherschicht besteht bei dem dargestellten Beispiel aus einer nicht saugfähigen Stützschicht aus gegenseitig verschweißten, unterschiedlich großen Partikeln aus geschlossenzellig geschwämmtem vernetztem Polyäthylen. Die durchschnittliche Partikelgröße beträgt im Bereich der Unterseite der Stützschicht etwa 20 mm, im Bereich der Oberseite der Stützschicht hingegen nur etwa 10 mm. Die Stützschicht weist durch diesen Aufbau bei einer ausgeglichenen Tragfähigkeit der Oberseite ein großes Speichervolumen für Flüssigkeit auf.

An der Oberseite der Stützschicht ist die aus Vliesstoff bestehende Verteilerschicht 6 in einen Abstand aufweisenden Flächenbereich angeklebt. Sie besteht bei einem Flächengewicht von 100 g/m$^2$ aus autogen veschweißten Polyesterfasern eines Titers von 5 dtex. Mit der Verteilerschicht ist eine Oberschicht 7 vernadelt. Diese besteht bei einem Flächengewicht von 60 g/m$^2$ aus Polypropylenfasern eines Titers von 7 dtex. Sie weist durch eine Hitzekalandrierung eine wesentlich engere Porenstruktur auf als die eigentliche Verteilerschicht 6 und bildet mit dieser eine geschlossene Einheit von großer Festigkeit.

Die mit der Verteilerschicht 6 verbundene Oberschicht ist über den Außenrand der Stützschicht 5 hinausragend verlängert und in diesem Bereich nach unten umgelegt und zwischen der Stützschicht 5 und der Dachhaut 3 eingeklemmt.

Das Eintauchen dieses Bereiches der Verteilerschicht in das in den Hohlräumen der Stützschicht 5 gespeicherte Wasservolumen ist bis zu dessen vollständigem Verbrauch sicher gewährleistet, und damit zugleich eine ausreichende Benetzung des oberhalb der Stützschicht liegenden Bereiches der Verteilerschicht 6 und des hier angeordneten Erdreiches.

Die Stützschicht 5 hat eine Dicke in senkrechter Richtung von etwa 35 mm. Sie ist von sich parallel zueinander und zu der Oberfläche erstreckenden Belüftungsöffnungen mit einem Durchmesser von 20 mm ganz durchdrungen und weist ein Speichervolumen auf, das es unter den in Mitteleuropa herrschenden Witterungsbedingungen erlaubt, auch lange Dürreperioden ohne weiteres zu überbrücken. Aus Starkregenfällen bzw. einer künstlichen Bewässerung stammendes Wasser vermag bei einem Überangebot die Oberschicht 7 und die Verteilerschicht 6 in senkrecher Richtung zu durchdringen und gelangt so unter Vermeidung der Gefahr einer Versumpfung des Erdreiches in die Hohlräume der Speicherschicht. Es wird hier bis zum Erreichen der Überlaufkante des Überlauf 2 angestaut und in der darüber hinausgehenden Menge komplikationslos abgeführt. Auch unter extremen Witterungsbedingungen ist daher stets ein optimales Bodenklima in dem Erdreich gewährleistet.

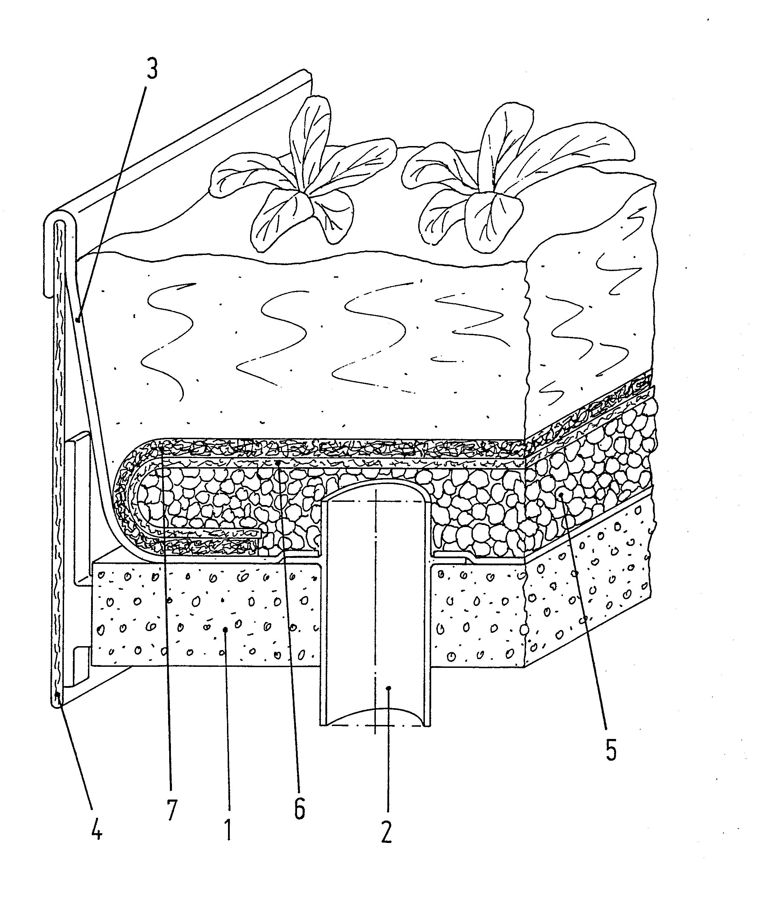

Patentansprüche:

1. Anstauvorrichtung für die Anzucht von Pflanzen oder Aussaaten, umfassend eine mit einem Wasserüberlauf versehene Wanne, eine darin angeordnete Speicherschicht und eine auf der Speicherschicht angeordnete Verteilerschicht aus Vliesstoff, dadurch gekennzeichnet, daß die Speicherschicht (5) aus einer in senkrechter Richtung nicht saugfähigen Stützschicht besteht und daß die Verteilerschicht (6) die Stützschicht (5) an wenigstens einer Stelle randseitig umgreift und bis auf den Boden der Wanne verlängert ist.

2. Anstauvorrichtung nach Anspruch 1, dadurch gekennzeichnet, daß die Stützschicht (5) eigenfest ausgebildet ist.

3. Anstauvorrichtung nach Anspruch 2, dadurch gekennzeichnet, daß die Stützschicht (5) untereinander verklebte Partikel und/oder Fasern umfaßt.

4. Anstauvorrichtung nach Anspruch 3, dadurch gekennzeichnet, daß die Partikel und/oder Fasern aus einem Polyolefin bestehen.

5. Anstauvorrichtung nach Anspruch 4, dadurch gekennzeichnet, daß das Polyolefin ein geschlossenzellig geschäumtes, vernetzes Polyäthylen ist.

6. Anstauvorrichtung nach Anspruch 1 - 5, dadurch gekennzeichnet, daß die Stützschicht (5) Hohlräume umfaßt, die untereinander verbunden und belüftet sind.

7. Anstauvorrichtung nach Anspruch 1 - 6, dadurch gekennzeichnet, daß die Verteilerschicht (6) zweischichtig
ausgebildet ist und eine Oberschicht (7) von verminderter Durchlässigkeit umfaßt.

8. Anstauvorrichtung nach Anspruch 1 - 7, dadurch gekennzeichnet, daß die Stützschicht (5) und die Verteilerschicht (6) in einen Abstand aufweisenden Flächenbereichen verbunden sind.

1/1